# EUROPÄISCHE PATENTSCHRIFT

(11) **EP 2 020 342 B1**
(45) Veröffentlichungstag und Bekanntmachung des Hinweises auf die Patenterteilung: **25.01.2012**
(21) Anmeldenummer: 08008151.6
(22) Anmeldetag: 29.04.2008
(51) Int. Cl.: B60R 21/045, B62D 25/14, B60R 21/00

(54) **Schalttafelanordnung für ein Kfz**
Instrument panel assembly for a motor vehicle
Tableau de distribution pour un véhicule automobile

(30) Priorität: 28.07.2007 DE 102007035482
(43) Veröffentlichungstag der Anmeldung: 04.02.2009
(73) Patentinhaber: Dr. Ing. h.c. F. Porsche AG, 70435 Stuttgart (DE)
(72) Erfinder: Schaupensteiner, Walter, 71277 Rutesheim (DE)

(56) Entgegenhaltungen:
- WO-A-2006/054670
- US-A1- 2003 071 448
- US-A1- 2004 036 264
- US-A1- 2004 251 670
- US-A1- 2005 218 641
- ANONYMOUS: "Crash energy management" RESEARCH DISCLOSURE, MASON PUBLICATIONS, HAMPSHIRE, GB, Bd. 406, Nr. 27, 1. Februar 1998 (1998-02-01), XP007122376 ISSN: 0374-4353

## Beschreibung

Die Erfindung betrifft eine Schalttafelanordnung für ein Kraftfahrzeug gemäß den Merkmalen des Oberbegriffs des Patentanspruchs 1.

Aus dem Serienfahrzeugbau ist bekannt, hinter der Schalttafel Kniefänger anzuordnen, die mit Deformationsmitteln versehen sind und damit zur Energieabsorption geeignet sind.

So zeigt beispielsweise die DE 101 46 495 B4 eine Schalttafelanordnung für ein Kraftfahrzeug mit einem Querträger und mit 4 Kniefängern, die mit einem Befestigungsabschnitt am Querträger befestigt sind und die einen vorgelagerten Deformationsabschnitt aufweisen. Der Deformationsabschnitt ist dabei so gestaltet, dass dieser zusammen mit einer Stützwand zur gezielten Energieaufnahme geeignet ist und bei einer definierten Kollision die Knie des Insassen weit reichend geschützt werden.

Aus der gattungsbildenden WO 2006/054670 A1 ist ein aktives Kniepolster bekannt, das bei einem Frontalaufprall in Richtung Fahrzeuginsassen verschiebbar ist.

Auch die US 2005/0218641 A1 zeigt ein aktives Kniepolster.

Die Veröffentlichung "Crash Energy Management" Reserach Disclosure, Mason Publications, Hampshire, GB, Bd. 406, Nr. 27 1. Februar 1998 (1998-02-01), XP 007122376 ISSN0374-4353, offenbart einen Querträger für eine Schalttafel mit einem integrierten Knieaufprallträger.

Aus der US 2004/0251670 A1 sind stabförmige Tragglieder für einen ausfahrbaren Kniefänger bekannt.

Die US 2004/0036264 A1 zeigt Stülprohre, die bei einer Belastung durch den Insassen deformierbar sind.

Schließlich ist aus der US 2003/0071448 A1 ein Kniepolster bekannt, dass ebenfalls mit deformierbaren Trägem ausgestattet ist.

Für andere Lastfälle, beispielsweise beim Auftreffen eines unangegurteten Insassen, ist es erforderlich, dass die Schalttafel nicht zu stark nachgibt, um eine Verstimmung des Knieairbagsystems zu verhindern.

Die Aufgabe der Erfindung besteht daher darin, eine Schalftafelanordnung für ein Kraftfahrzeug unter Beibehaltung der vorteilhaften Wirkung der gattungsgemäßen Schalttafel eine Intrusion der Schalttafel für den Lastfall eines unangegurteten Insassen zu vermindern.

Diese Aufgabe wird erfindungsgemäß mit den Merkmalen des Patentanspruchs 1 gelöst.

Vorteilhafte Ausgestaltungen der Erfindung ergeben sich aus den Merkmalen der Unteransprüche.

Eine Schalttafelanordnung umfasst einen Querträger, der sich quer zur Fahrzeuglängsrichtung erstreckt und an festen, seitlichen Aufbaustrukturen gehalten ist. Die Schalttafelanordnung wird zum Fahrzeuginnenraum hin mit einer Schalttafel abgedeckt, wobei sich hinter der Schalttafel ein oder mehrere Kniefänger befinden. Jeder der Kniefänger ist mit einem Befestigungsabschnitt am Querträger befestigt und weist einen Kraftaufnahmeabschnitt auf, der sich im Wesentlichen in Richtung des Knies eines Insassen hin erstreckt. Erfindungsgemäß ist der Kniefänger ein stabförmiges Tragglied, das im Wesentlichen nur längs zu seiner Achse belastet ist. Durch dieses einfache Bauteil werden im Wesentlichen keine Querkräfte übertragen und es findet von Anfang an eine Kraftaufnahme bzw. - weiterleitung statt. Durch die steife Ausgestaltung des Kniefängers wird verhindert, dass Schalttafelunterteile durch das Knie eines Insassen soweit intrudieren, dass das Knieairbagsystem verstimmt wird.

Für ein anfangs weiches Verhalten der Schalttafelanordnung kann der Kniefänger in einem Abstand zu einer Stützwand, die der Schalttafel zugeordnet ist, enden.

Eine leichte Montage ergibt sich, wenn der Befestigungsabschnitt des Kniefängers rohrförmig gestaltet ist, wobei die Innenkontur des Befestigungsabschnitts korrespondierend zu einem Anschlussstück des Querträgers ausgebildet ist. Von Vorteil dabei ist, dass je nach Ausstattungsvariante oder Fahrzeugmarkt der Kniefänger aufgesteckt wird oder nicht.

Ein Verklipsen des Kniefängers auf dem Anschlussstück lässt sich in einfacher Weise mit Rastnasen realisieren, die am Befestigungsabschnitt vorgesehen sind und die dafür vorgesehene Aussparungen am Anschlussstück hintergreifen.

Um bei der Montage zu gewährleisten, dass der Kniefänger die richtige Position einnimmt, können an der Innenkontur Führungsnuten vorgesehen sein.

Eine besonders steife Ausbildung des Kniefängers kann bevorzugt durch einen Querschnitt erreicht werden, der einem Doppel-T-Profil entspricht.

In einer bevorzugten Ausgestaltungsform der Erfindung schließt der Kraftaufnahmeabschnitt zum Stützabschnitt mit einer kreisrunden Stirnwand ab.

Der sich anschließende Stützabschnitt kann durch sich kreuzende Rippen gebildet sein.

Eine elastische Abstützung der Schalttafel kann erreicht werden, wenn ein Gummielement auf den Stützabschnitt aufgesteckt wird, wobei dieses Gummielement den Abstand zur Stützwand überbrückt.

Weitere vorteilhafte Ausgestaltungen der Erfindung werden im Folgenden anhand der Zeichnung näher erläutert. Dabei zeigen:
- Fig. 1: eine Schrägansicht einer Schalttafelanordnung ohne Schalttafel,
- Fig. 2: eine Detaildarstellung eines Kniefängers gemäß Fig. 1,
- Fig. 3: eine alternative Ausgestaltungsform eines Kniefängers gemäß Fig. 1 sowie
- Fig. 4: einen Querschnitt durch eine erfindungsgemäße Schalttafelanordnung gemäß Linie IV - IV in Fig. 1.

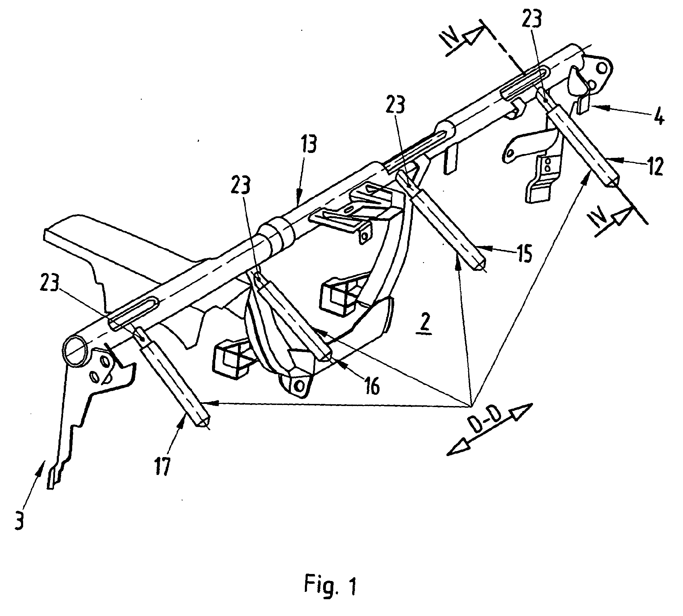

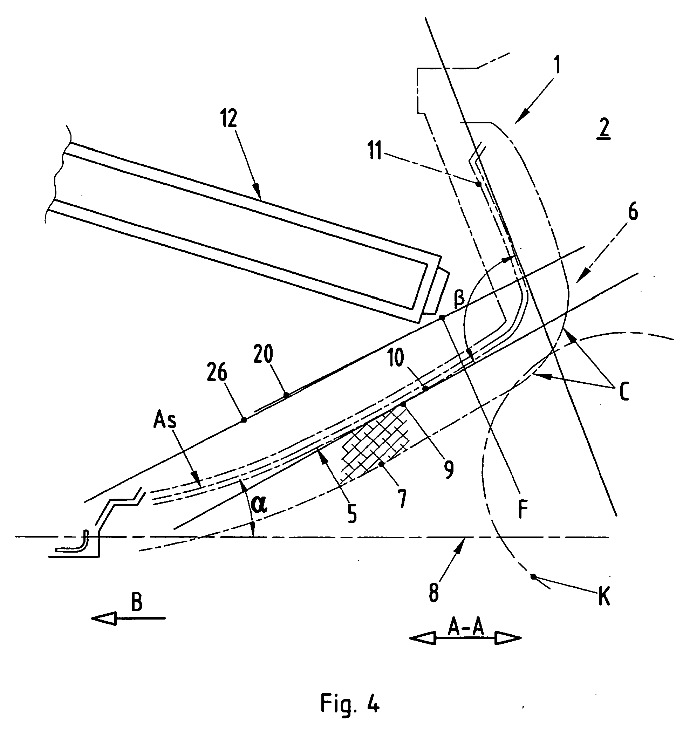

Wie aus den Fig. 1 und 4 hervorgeht, ist von einem Kraftfahrzeug eine Schalttafel 1 dargestellt, die sich quer zur Fahrzeuglängsrichtung A - A in einem Fahrgastraum 2 zwischen festen seitlichen Aufbaustrukturen 3 und 4, beispielsweise den A-Säulen, erstrecken. Die Schalttafel 1 umfasst einen Winkelrahmen 5, der auf der dem Fahrgastraum 2 zugewandten Seite 6 mit einer Polsterung 7 versehen ist. Im Querschnitt gesehen weist der Winkelrahmen 5 einen unteren im Winkel α zu einer Horizontalen 8 verlaufenden sowie entgegen der Fahrtrichtung B ansteigenden als Stützwand 9 ausgebildeten Schenkel 10 und einen oberen in Fahrtrichtung B nach oben gerichteten Schenkel 11 auf. Die Schenkel 10 und 11 schließen einen Winkel β ein. Ungefähr bei C, das heißt am Übergang zwischen dem Schenkel 10 und dem Schenkel 11, ist die Schalttafel 1 bzw. ihre Stützwand 9 auf ein Knie K eines Insassen ausgerichtet, der Platz auf den Vordersitzen eines Kraftfahrzeugs eingenommen haben.

In Fahrtrichtung B gesehen vor der Schalttafel 1 ist eine Kniestütze 12 angeordnet, deren Lage in Fig. 4 nur schematisch dargestellt ist. Die Kniestütze 12 ist an einem Querträger 13 befestigt, der an den seitlichen Aufbaustrukturen 3 und 4 gehalten ist. Der Querträger 13 weist neben der Kniestütze 12 noch weitere Kniefänger 15, 16, 17 auf, die bei einem Unfall die Knie der Insassen abstützen. Im Ausführungsbeispiel sind fahrerseitig und beifahrerseitig je zwei Kniefänger 12, 15 bzw. 16, 17 angeordnet, und zwar - in Fahrzeugquerrichtung D - D gesehen - jeweils seitlich außerhalb einer konstruktiv definierten Lage der Knie des Fahrers und des Beifahrers. Andere Arten der Anordnung der Kniefänger sind jedoch auch denkbar.

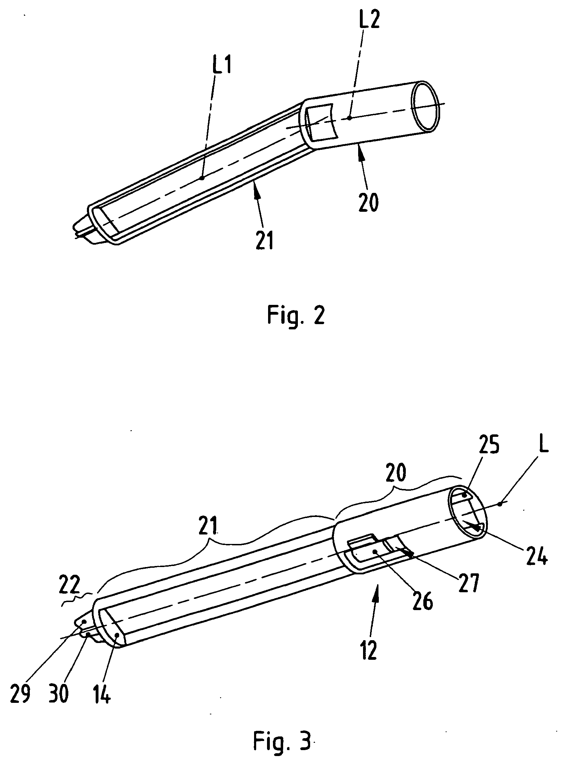

In Fig. 3 ist der Kniefänger 12 näher dargestellt. Der Kniefänger 12 ist ein Kunststoffteil und setzt sich aus drei Teilbereichen zusammen: einem Befestigungsabschnitt 20, einem Kraftaufnahmeabschnitt 21 und einen Stützabschnitt 22. Der Befestigungsabschnitt 20 ist rohrförmig ausgebildet und wird auf ein Anschlussstück 23 (vgl. Fig. 1) aufgesteckt. Um eine Fehlmontage zu vermeiden, ist in der Innenkontur 24 eine Führungsnut 25 eingeformt, die mit einem entsprechenden, hier nicht näher dargestellten Gegenstück am Anschlussstück 23 zusammenwirkt. Es sind beidseitig am Befestigungsabschnitt 20 Rastnasen 26 in Ausschnitten 27 eingebracht, um den Kunststoff-Kniefänger 12 in seiner Einbaulage auf dem Anschlussstück 23 zu verrasten.

Der sich an den Befestigungsabschnitt 20 anschließende Kraftaufnahmeabschnitt 21 weist einen Doppel-T-Profilförmigen Querschnitt auf und ist damit nur in geringem Maße längs seiner Achse deformierbar. Die Längsachse des Befestigungsabschnitts 20 ist identisch mit der Längsachse L des Kraftaufnahmeabschnitts 21.

In Richtung der Schalttafel 1 schließt der Kniefänger 12 mit seinem Stützabschnitt 22 ab. Zwischen dem Stützabschnitt 22 und dem Kraftaufnahmeabschnitt 21 ist eine kreisrunde Stirnwand 14 angeordnet. Der Stützabschnitt 22 umfasst zwei Rippen 29 und 30 die sich gegenseitig kreuzen und die in einem Abstand vor der Schalttafel enden. Auf diesen Stützabschnitt 22 kann ein Gummielement, das hier nicht näher dargestellt ist, aufgesetzt sein.

Der in Fig. 2 dargestellte Kniefänger 16, unterscheidet sich vom Kniefänger 12 gemäß Fig. 3 dadurch, dass die Längsachse L1 des Kraftaufnahmeabschnitts 21 nicht identisch mit der Längsachse L2 des rohrförmigen Befestigungsabschnitts 20 ist. Das hat den Grund, das die Kniefänger direkt auf die konstruktiv definierte Lage der Knie des Fahrers oder Beifahrers zielen sollen.

Bei einem Aufprall des Fahrzeugs kommt es zu einer Vorverlagerung des Insassen, also auch der Knie K, die zunächst mit der dem Fahrgastraum 2 zugewandten Seite 6, also mit der Polsterung 7, kontaktieren. Der zwischen dem vorderen Abschluss des Kniefängers 12, 15, 16, 17 und der Stützwand 9 angeordnete Abstand ermöglicht ein nachgiebiges Verhalten der Schalttafel 1 in einer frühen Phase des Anpralls. Erst wenn es zur Anlage zwischen Kniefänger 12, 15, 16, 17 und Schalttafel 1 kommt, tritt die Abstützungsfunktion des Kniefängers 12, 15, 16, 17 in Kraft.

## Patentansprüche

1. Schalttafelanordnung für ein Kraftfahrzeug mit einem Querträger (13), der sich quer zur Fahrzeuglängsrichtung erstreckt und an festen seitlichen Aufbaustrukturen (3, 4) gehalten ist, mit einer Schalttafel (1) zur Abdeckung zum Fahrzeuginnenraum hin und mit einem Kniefänger (12), der einen Befestigungsabschnitt (20) aufweist, mit dem der Kniefänger (12) am Querträger (13) befestigt ist, und der einen Kraftaufnahmeabschnitt (21) aufweist, der sich im Wesentlichen in Richtung des Knies eines Insassen hin erstreckt, wobei der Kniefänger (12), insbesondere dessen Kraftaufnahmeabschnitt (21), ein stabförmiges Tragglied ist, das im Wesentlichen längs zu seiner Achse (L, L1) belastet ist, **dadurch gekennzeichnet, dass** der Befestigungsabschnitt (20) rohrförmig ausgebildet ist, wobei dessen Innenkontur (24) korrespondierend zu einem Anschlussstück (23) des Querträgers (13) ausgebildet ist.

2. Schalttafelanordnung nach Anspruch 1, **dadurch gekennzeichnet, dass** der Kniefänger (12) in einem Abstand zu einer Stützwand (9) endet.

3. Schalttafelanordnung nach Anspruch 1, **dadurch gekennzeichnet, dass** der Befestigungsabschnitt (20) Aussparungen (27) aufweist, in denen Rastnasen (26) angeordnet sind.

4. Schalttafelanordnung nach Anspruch 1 oder 3, **dadurch gekennzeichnet, dass** in die Innenkontur (24) des Befestigungsabschnitts (20) eine Führungsnut (25) eingebracht ist.

5. Schalttafelanordnung nach Anspruch 1, **dadurch gekennzeichnet, dass** der Querschnitt des Kraftaufnahmeabschnitts (21) als Doppel-T-Profil ausgebildet ist.

6. Schalttafelanordnung nach Anspruch 5, **dadurch gekennzeichnet, dass** der Kraftaufnahmeabschnitt (21) zum Stützabschnitt (22) mit einer kreisrunden Stirnwand (14) abschließt.

7. Schalttafelanordnung nach Anspruch 6, **dadurch gekennzeichnet, dass** der Stützabschnitt (22) durch sich kreuzende Rippen (29, 30) gebildet ist.

8. Schalttafelanordnung nach Anspruch 6 oder 7, **dadurch gekennzeichnet, dass** ein Gummielement auf den Stützabschnitt (22) aufsteckbar ist, der den Abstand zur Stützwand (9) überbrückt

## Claims

1. Instrument panel assembly for a motor vehicle having a crossmember (13) which extends transversely with respect to the longitudinal direction of the vehicle and is held on fixed lateral body structures (3, 4), having an instrument panel (1) for providing coverage with respect to the passenger compartment of the vehicle, and having a knee guard (12) which has an attachment section (20) with which the knee guard (12) is attached to the crossmeber (13), and which has a force-absorbing section (21) which extends essentially in the direction of the vehicle occupants' knee, wherein the knee guard (12), in particular the force-absorbing section (21) thereof, is a rod-shaped supporting element which is loaded essentially longitudinally with respect to its axis (L, L1), **characterized in that** the attachment section (20) is of tubular design, wherein the internal contour (24) of said attachment section is designed to correspond to a connecting element (23) of the crossmember (13).

2. Instrument panel assembly according to Claim 1, **characterized in that** the knee guard (12) ends at a distance from a supporting wall (9).

3. Instrument panel assembly according to Claim 1, **characterized in that** the attachment section (20) has cutouts (27) in which latching projections (26) are arranged.

4. Instrument panel assembly according to Claim 1 or 3, **characterized in that** a guide groove (25) is formed in the internal contour (24) of the attachment section (20).

5. Instrument panel assembly according to Claim 1, **characterized in that** the cross section of the force-absorbing section (21) is embodied as a double-T profile.

6. Instrument panel assembly according to Claim 5, **characterized in that** the force-absorbing section (21) ends with a circular end wall (14) at the supporting section (22).

7. Instrument panel assembly according to Claim 6, **characterized in that** the supporting section (22) is formed by intersecting fins (29, 30).

8. Instrument panel assembly according to Claim 6 or 7, **characterized in that** a rubber element can be plugged onto the supporting section (22) which spans the distance to the supporting wall (9).

## Revendications

1. Agencement de tableau de distribution pour un véhicule automobile équipé d'une traverse (13) s'étendant transversalement à la direction longitudinale du véhicule et maintenue contre des structures en saillie (3, 4) latérales fixes, avec un tableau de distribution (1) servant de cache en direction de l'habitable du véhicule et avec une butée pour genou (12) comportant une section de fixation (20) permettant de fixer la butée pour genou (12) à la traverse (13) ainsi qu'une section d'absorption de force (21) s'étendant pour l'essentiel en direction du genou d'un occupant du véhicule, la butée pour genou (12), notamment sa section d'absorption de force (21), prenant la forme d'un élément de support en forme de barre sollicité pour l'essentiel longitudinalement à son axe (L, L1) **caractérisé en ce que** la section de fixation (20) est réalisée en forme de tube, son contour intérieur (24) étant réalisé de façon correspondante à une pièce de raccordement (23) de la traverse (13).

2. Agencement de tableau de distribution selon la revendication 1, **caractérisé en ce que** la butée pour genou (12) prend fin à une certaine distance d'une paroi d'appui (9).

3. Agencement de tableau de distribution selon la revendication 1, **caractérisé en ce que** la section de fixation (20) comporte des évidements (27) dans lesquels sont disposés des becs d'encliquetage (26).

4. Agencement de tableau de distribution selon la revendication 1 ou 3, **caractérisé en ce qu'**une rainure de guidage (25) est amenée dans le contour intérieur (24) de la section de fixation (20).

5. Agencement de tableau de distribution selon la revendication 1, **caractérisé en ce que** la section transversale de la section d'absorption de force (21) prend la forme d'un profilé en double T.

6. Agencement de tableau de distribution selon la revendication 5, **caractérisé en ce que** la section d'absorption de force (21) se finit en direction de la section de soutien (22) par une paroi avant (14) circulaire.

7. Agencement de tableau de distribution selon la revendication 6, **caractérisé en ce que** la section d'appui (22) est formée par des nervures (29, 30) croisées.

8. Agencement de tableau de distribution selon la revendication 6 ou 7, **caractérisé en ce qu'**un élément en caoutchouc est enfiché sur la section d'appui (22), ledit élément comblant la distance par rapport à la paroi d'appui (9).
